# FASCICULE DE BREVET EUROPEEN

(11) **EP 2 368 016 B1**
(45) Date de publication et mention de la délivrance du brevet: **12.10.2016**
(21) Numéro de dépôt: 09756529.5
(22) Date de dépôt: 25.11.2009
(51) Int. Cl.: F01D 9/04

(54) **DISPOSITIF ANTI-USURE POUR AUBES D'UN DISTRIBUTEUR DE TURBINE D'UNE TURBOMACHINE AÉRONAUTIQUE**
VERSCHLEISSSCHUTZVORRICHTUNG FÜR DIE SCHAUFELN EINES LEITSCHAUFELTRÄGERS IN EINEM TURBINENTRIEBWERK IN DER AERONAUTIK
ANTI-WEAR DEVICE FOR THE BLADES OF A TURBINE DISTRIBUTOR IN AN AERONAUTICAL TURBINE ENGINE

(30) Priorité: 26.11.2008 FR 0858028
(43) Date de publication de la demande: 28.09.2011
(73) Titulaire: Safran Aircraft Engines, 75015 Paris (FR)
(72) Inventeur: BAUMAS, Olivier, Jean, Daniel, F-77240 Vert Saint Denis (FR); DURAND, Didier, Noël, F-77340 Pontault Combault (FR); HERZER, Eric, F-78800 Houilles (FR); ROSSI, Patrick, Jacques, F-94300 Vincennes (FR)
(74) Mandataire: Gevers & Orès
(86) Numéro de dépôt international: PCT/EP2009/065860
(87) Numéro de publication internationale: WO 2010/060938

(56) Documents cités:
- EP-A2- 0 974 734
- EP-A2- 1 657 405
- US-A- 5 333 995

## Description

Le domaine de la présente invention est celui des moteurs aéronautiques et plus particulièrement celui des turbomachines.

Les turbomachines aéronautiques comprennent classiquement plusieurs modules tels qu'un compresseur basse pression (BP) suivi d'un compresseur haute pression (HP), une chambre de combustion, une turbine haute pression suivie d'une turbine basse pression, qui entraînent le compresseur BP ou HP correspondant, et un système d'éjection des gaz. Chacune des turbines est formée alternativement de roues d'aubes fixes ou distributeurs et de roues d'aubes mobiles qui forment ensemble un étage de turbine. Les modules de turbine BP peuvent comporter plusieurs étages, qui sont le plus souvent au nombre de deux.

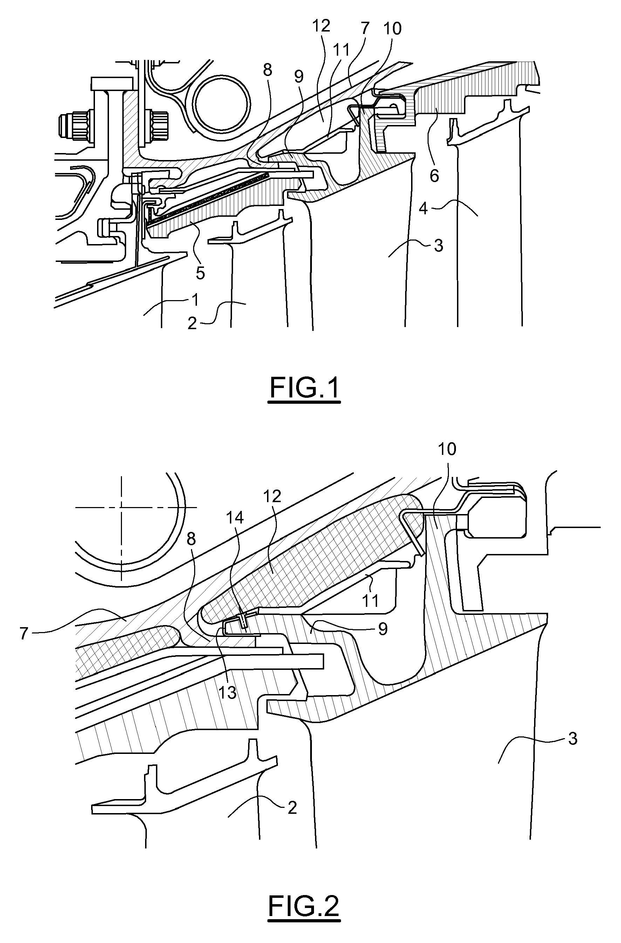

Les aubes mobiles sont portées à leur partie inférieure par le rotor de la turbomachine et fixées sur un disque de turbine. Les aubes de distributeurs sont par contre tenues par leur partie supérieure et fixées sur un carter, dénommé carter de turbine. Comme on le voit sur la figure 1, qui représente une configuration de l'art antérieur, les aubes mobiles 2 et 4 des deux étages d'une turbine basse pression sont libres à leur partie supérieure et positionnées en face d'un matériau abradable 5 et 6 porté par un anneau de turbine. Des léchettes portées par le talon de l'aube s'engagent dans cet abradable pour assurer une étanchéité entre l'amont de l'aube et son aval, malgré les déformations dues aux vibrations et aux différentes dilatations des divers matériaux.

Sur la figure 1, les aubes 1 du distributeur du premier étage BP sont fixées directement sur la structure du moteur alors que les aubes 3 du distributeur du deuxième étage BP sont tenues par un carter de turbine 7 lié à la structure du moteur. Ce carter présente, en coupe radiale, un crochet 8 s'étendant axialement (en référence à l'axe de rotation de la turbomachine) sur lequel vient se poser un rail 9, formant moyen d'accrochage antérieur (en référence à la direction d'écoulement du fluide), qui s'étend également axialement à partir de la plate-forme de l'aube 3 du deuxième étage. L'aube 3 est portée à son extrémité antérieure par le crochet 8 du carter BP, formant support pour le rail antérieur 9 et, à son extrémité postérieure, par un rail postérieur 10 posé sur un crochet postérieur porté par le carter de turbine BP, soit directement, soit, comme illustré sur la figure 1, par l'intermédiaire de l'anneau de turbine du deuxième étage de la turbine BP. Une tôle pare-feu 11 est enfin positionnée sur le rail antérieur 9 contre la plate-forme de l'aube de distributeur 3. Un calorifugeage compressible 12 est disposé entre la tôle pare-feu 11 et le carter de turbine 7.

On constate cependant après un certain temps d'utilisation, une usure du crochet 8 qui résulte des micro-déplacements créés par les vibrations et les différences de dilatation thermique entre les pièces. Cette usure peut aller jusqu'à la disparition complète du crochet du carter, ce qui entraîne la perte du maintien de l'aube 3, qui peut alors basculer autour du crochet postérieur et venir par sa partie inférieure interférer avec la course des aubes mobiles BP 4. Les conséquences de cette usure seraient alors extrêmement graves puisqu'elles pourraient conduire à la panne du moteur.

Des dispositifs anti-usure ont été proposées, notamment dans les demandes de brevet EP1657405 et EP0974734, pour favoriser un contact glissant entre les pièces. Ces dispositifs sont simplement insérés entre les aubes et le carter de turbine, sans avoir pour fonction de constituer une solution de réparation pour des aubes usagées. Dans le cas d'aubes réparées il importe de pouvoir banaliser les aubes répares au milieu des aubes neuves et ainsi, en réduisant les contraintes associées à la logistique, de réduire les coûts.

La présente invention a pour but de remédier à ces inconvénients en proposant une solution qui puisse être installée en réparation sur les moteurs existants et qui facilite la gestion des stocks de pièces de distributeur de turbine.

A cet effet, l'invention a pour objet un secteur d'aubes de distributeur de turbine destiné à être porté par un carter de turbine d'une turbomachine aéronautique, comportant un moyen d'accrochage antérieur et un moyen d'accrochage postérieur, ledit moyen d'accrochage antérieur étant destiné à venir en appui sur un support porté par le carter de turbine, ledit secteur comportant en outre un dispositif anti-usure constitué par une pièce en matériau métallique enveloppant l'extrémité antérieure du moyen d'accrochage antérieur et s'intercalant entre ledit moyen d'accrochage antérieur et ledit support de façon à assurer un contact glissant entre ces deux pièces, caractérisé en ce que le dispositif anti-usure est maintenu axialement en position sur ledit secteur d'aubes à l'aide d'un moyen de fixation qui coopère avec le moyen d'accrochage antérieur.

La présence du dispositif permet de supprimer le grippage (ou "fretting") entre le crochet du carter de turbine et le rail antérieur de l'aube de distributeur BP et ainsi améliore la durée de vie du crochet en facilitant le glissement des pièces en contact. Le fait de maintenir le dispositif anti-usure par un moyen de fixation permet de ne pas gérer les secteurs réparés de façon différente des pièces neuves. On améliore ainsi la logistique des pièces de distributeur de turbine.

De façon préférentielle le moyen d'accrochage antérieur a la forme d'une langue s'étendant axialement et la partie supérieure dudit dispositif ne s'étend pas axialement sur toute la longueur du moyen d'accrochage antérieur.

La partie supérieure du dispositif peut ainsi se loger sur la langue du moyen d'accrochage, sans interférer avec la tôle pare-feu de la turbine.

Selon des caractéristiques préférentielles le dispositif anti-usure :
- est maintenu en place sur le moyen d'accrochage antérieur par au moins un pion emmanché dans un alésage ménagé dans l'épaisseur du moyen d'accrochage.
- s'étend sur toute la longueur du moyen d'accrochage antérieur et se prolonge à son extrémité postérieure par un ressaut, ledit moyen ayant la forme d'une langue s'étendant axialement et comportant à son extrémité postérieure une gorge dans laquelle s'enclenche ledit ressaut.
- comporte au moins une languette s'étendant sur toute la longueur du moyen d'accrochage antérieur et se terminant à son extrémité postérieure par un ressaut, ledit moyen ayant la forme d'une langue s'étendant axialement et comportant à son extrémité postérieure une gorge dans laquelle s'enclenche ledit ressaut. Préférentiellement son épaisseur hors tout, mesurée radialement, est inférieure ou égale à celle de ladite langue augmentée de celle de la partie dudit dispositif située entre le moyen d'accrochage antérieur et le support, de sorte que ledit dispositif ne fasse pas saillie au dessus de la partie supérieure de ladite langue, ladite langue présentant des décrochements permettant d'y insérer lesdites languettes.
- s'étend sur toute la longueur du moyen d'accrochage antérieur et comporte à son extrémité postérieure au moins un bord tombé, ledit moyen ayant la forme d'une langue s'étendant axialement et comportant à son extrémité postérieure au moins une découpe apte à recevoir ledit bord tombé.
- s'étend sur toute la longueur du moyen d'accrochage antérieur et comporte sur sa face supérieure au moins une dépression, ledit moyen ayant la forme d'une langue s'étendant axialement et comportant sur la partie supérieure de cette langue au moins une dépression apte à coopérer avec la dépression dudit dispositif.

Avantageusement le dispositif anti-usure a une longueur sur la circonférence sensiblement égale à celle dudit secteur et est positionné avec un décalage angulaire par rapport audit secteur, de façon à pouvoir recouvrir, au moins partiellement, un secteur adjacent et à assurer une étanchéité entre les deux secteurs.

Selon d'autres caractéristiques préférentielles, le dispositif :
- est réalisé en un superalliage à base nickel ou cobalt.

Préférentiellement le matériau métallique est un alliage commercialisé sous la dénomination de HA188.
- l'épaisseur du matériau est comprise entre 0,05 et 0.4 mm.

L'invention revendique également un module de turbine comprenant au moins une roue d'aubes de distributeurs constituée de secteurs tels que décrit ci-dessus. Elle revendique enfin un moteur aéronautique comprenant un tel module de turbine.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés. Sur ces dessins :
- la figure 1 est une vue en coupe radiale d'un système d'attache des aubes de distributeurs du deuxième étage d'une turbine BP selon l'art antérieur ;
- la figure 2 est une vue en coupe radiale du système d'attache d'une aube de distributeur d'un deuxième étage de turbine BP, la plate-forme de ladite aube étant équipée d'un dispositif anti-usure selon un mode de réalisation de l'invention ;

- la figure 3 est une vue en perspective d'un secteur de distributeur d'un deuxième étage de turbine BP comportant plusieurs aubes, équipé d'un dispositif anti-usure selon le même mode de réalisation de l'invention ;
- la figure 4 est une vue de détail en coupe du système d'attache présenté à la figure 2 ;
- la figure 5 est une vue en coupe montrant un dispositif anti-usure selon un second mode de réalisation ;
- la figure 6 est une vue en coupe montrant un dispositif anti-usure selon un troisième mode de réalisation ;
- la figure 7 est une vue en coupe montrant un dispositif anti-usure selon un quatrième mode de réalisation ;
- la figure 8 est une vue en coupe montrant un dispositif anti-usure selon un cinquième mode de réalisation.

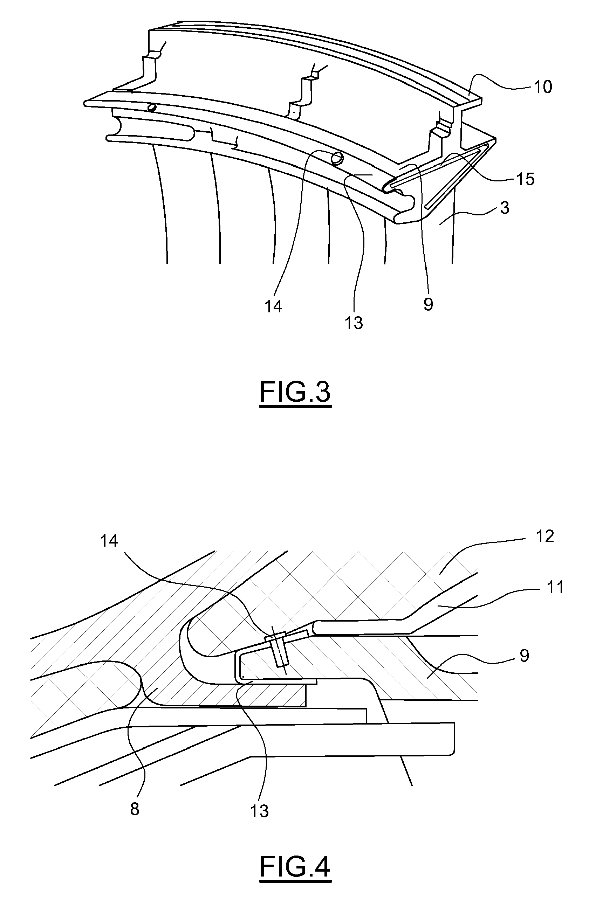

En se référant aux figures 2 à 4, on voit la plate-forme d'une aube 3 de distributeur d'un deuxième étage de turbine BP avec un rail antérieur 9 et un rail postérieur 10. Le rail antérieur 9 repose sur le crochet 8 du carter de turbine BP 7. Il supporte lui-même la tôle pare-feu 11 qui a pour objet de constituer une barrière thermique entre la veine et le carter BP 7. Le rail antérieur 9 a, en coupe, la forme d'une langue s'étendant radialement et se terminant par une extrémité multi facettes ou arrondie, sur laquelle est fixé un dispositif anti-usure 13, objet de l'invention, qui la recouvre en épousant sa forme. Ce dispositif a, comme on le voit sur la figure 3, la forme d'un secteur dont l'ouverture angulaire correspond à celle du secteur du distributeur BP sur lequel il est monté. Sa coupe radiale présente une forme en U, apte à envelopper l'extrémité de la langue du rail antérieur 9 et il se prolonge à sa partie inférieure jusqu'à dépasser axialement de l'extrémité postérieure du crochet 8. Il assure ainsi l'interface mécanique entre le rail antérieur 9 et le crochet 8 et supprime tout contact direct entre eux.

Le dispositif est fixé, dans le premier mode de réalisation, au rail antérieur 9 par l'intermédiaire de pions 14 emmanchés dans des alésages pratiqués dans l'épaisseur du rail. Les pions 14 sont disposés régulièrement le long du secteur d'aubes, et sont en nombre suffisant pour assurer le maintien du dispositif anti-usure sur le rail antérieur, la figure 3 en représentant deux à titre d'exemple, sans que ce nombre soit limitatif.

En se référant à la figure 3 on voit une rainure 15 creusée dans l'extrémité circonférentielle du secteur du distributeur BP. Cette rainure a pour objet, en coopération avec une autre rainure positionnée en regard sur le secteur voisin et avec une lamelle de liaison, d'assurer l'étanchéité entre deux secteurs consécutifs du distributeur. Cette rainure ne s'étend pas axialement jusqu'à dépasser l'extrémité de la langue du rail antérieur 9, ce qui permet un positionnement du dispositif anti-usure décalé angulairement par rapport au secteur sur lequel il est monté. En étant positionné à cheval sur deux secteurs consécutifs d'aubes, le dispositif anti-usure présente l'avantage supplémentaire d'améliorer l'étanchéité entre les secteurs.

En se référant à la figure 4 on voit que la tôle pare-feu 11 ne s'étend pas axialement jusqu'à l'extrémité antérieure de la langue du rail antérieur 9 et qu'elle laisse de la place le long de cette langue pour que la partie supérieure du dispositif anti-usure 13 puisse s'y loger. Il n'y a pas dans ce mode de réalisation de recouvrement du dispositif anti-usure 13 par la tôle pare-feu 11 et vice versa.

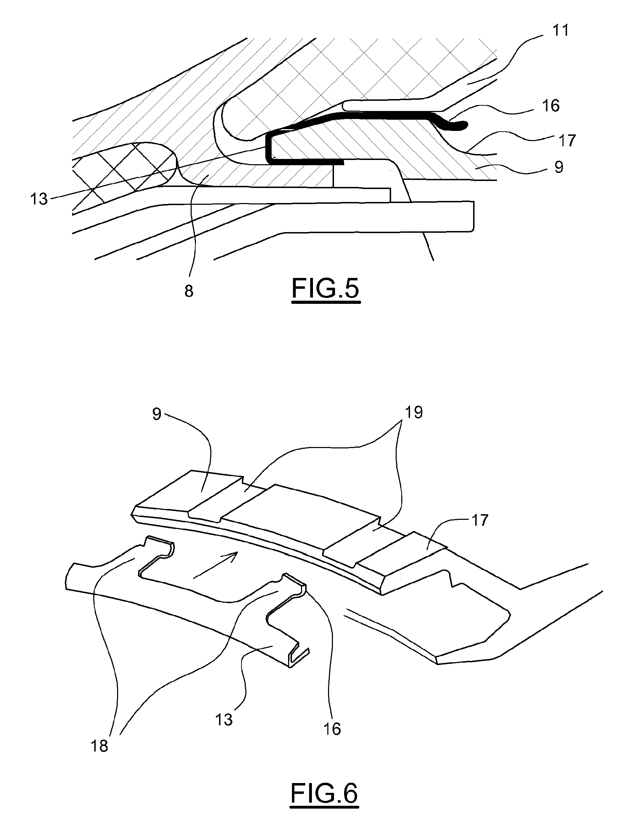

En se référant à la figure 5, on va maintenant décrire un deuxième mode de réalisation. Les éléments du dispositif identiques au premier mode de réalisation sont désignés par le même chiffre de référence et ne sont pas décrits à nouveau. Ici, la partie supérieure du dispositif anti-usure 13 ne recouvre pas seulement l'extrémité de la langue du rail antérieur mais la recouvre entièrement sur sa partie externe. Elle se termine du côté postérieur par un ressaut 16 qui s'enclenche dans une gorge 17 pratiquée à l'extrémité postérieure de la langue du rail antérieur 9. L'épaisseur du dispositif anti-usure 13 étant petite par rapport à sa longueur il présente une flexibilité selon la direction axiale qui génère un effet ressort et le maintient contre la langue du rail antérieur une fois que le ressaut 16 est en place dans la gorge 17. La mise en place du dispositif anti-usure s'effectue en le poussant axialement contre le rail antérieur 9 et en contrant cet effet ressort jusqu' à ce que le ressaut 16 vienne se loger dans la gorge 17.

En se référant à la figure 6 on voit maintenant un troisième mode de réalisation, portant là encore sur le mode de fixation du dispositif anti-usure 13 sur la langue du rail antérieur 9. La longueur axiale du dispositif anti-usure 13 se limite, comme dans le premier mode de réalisation, à la couverture de l'extrémité du rail antérieur 9. Ce dispositif présente par contre plusieurs languettes 18 réparties régulièrement sur sa circonférence, la figure 6 en représentant deux, sans que ce nombre soit limitatif. Ces languettes s'étendent axialement, comme dans le second mode de réalisation, jusqu'à recouvrir la langue du rail antérieur 9 sur toute sa longueur et se terminent de même par des ressauts 16 qui s'engagent dans la gorge 17 du rail antérieur 9. Pour faciliter le passage de ces languettes 18, des décrochements 19 sont pratiqués dans l'épaisseur de la langue du rail antérieur 9 en regard des dites languettes 18, qui ne font plus saillie de la langue et ne perturbent pas le contact entre la tôle pare-feu 11 et la partie externe du rail antérieur 9. De même que précédemment les languettes 18 présentent une flexibilité dans la direction axiale qui génère l'effet ressort mentionné précédemment.

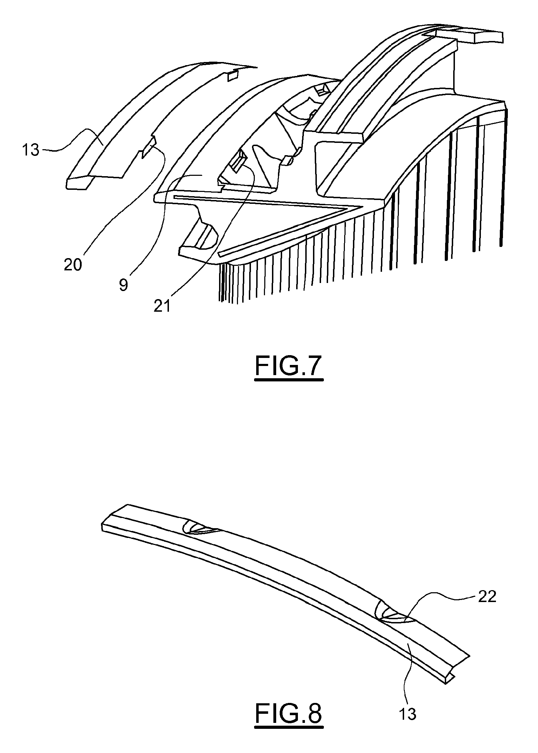

Des variantes des modes de réalisation précédents sont également représentées sur les figures 7 et 8. Le mode représenté sur la figure 7 est une variante du second mode de réalisation où le ressaut 16 est remplacé par des bords tombés 20 disposés de façon discrète sur la périphérie postérieure du dispositif anti-usure 13 et où des découpes 21 sont creusées dans la gorge 17 du rail antérieur pour recevoir lesdits bords tombés. Le mode représenté sur la figure 8 est aussi une variante du second mode de réalisation où des dépressions 22 sont formées dans la partie supérieure du dispositif anti-usure 13 pour s'insérer dans des dépressions creusées en regard dans l'épaisseur du rail antérieur 9.

On va maintenant décrire l'amélioration apportée par le dispositif anti-usure 13 selon l'un quelconque des modes de réalisation.

Dans une configuration courante sur les moteurs aéronautiques, le contact entre le carter de turbine BP et le point antérieur d'attache de l'aube de distributeur du deuxième étage de turbine BP est un point sensible car il est situé dans une zone relativement chaude et il est souhaitable de réaliser le maintien de ces aubes avec des dispositifs qui soient les plus légers possibles. Les attaches postérieures sont moins sensibles car la surface disponible pour assurer le maintien des aubes est plus importante.

En intercalant un dispositif anti-usure tel qu'un clinquant décrit ci-dessus, on améliore très sensiblement la durée de vie des pièces en contact en facilitant le glissement d'une pièce sur l'autre. Cela permet de supprimer le grippage (ou "fretting") entre le crochet 8 du carter de turbine BP 7 et le rail antérieur 9 de l'aube 3 de distributeur BP. Le clinquant est choisi préférentiellement en un matériau métallique tel qu'un superalliage à base nickel ou cobalt, par exemple du HA188 (ou KCN22W), qui a pour effet de créer une surface glissante entre les pièces et de leur faire supporter sans dommage les micro-déplacements issus des vibrations et des différences de dilatation.

Le choix du clinquant est de préférence de 0.08 mm, avec une tolérance sur cette épaisseur de 8µm, ce qui permet de garantir un assemblage dans des conditions de tolérance identiques à la version sans clinquant. Il est bien évident que cette épaisseur est purement indicative et qu'il est possible d'utiliser des clinquants ayant des épaisseurs voisines, comprises par exemple entre 0.05 et 0.4 mm.

L'interposition d'un clinquant entre le crochet 8 et le rail antérieur 9 a également pour effet de créer une barrière thermique entre les deux pièces, qui fonctionnent en croisière à des températures nominales de 637°C pour le rail et de 765°C pour le crochet, et au décollage de 773°C pour le rail et de 906°C pour le crochet. L'introduction du clinquant a pour effet de couper la conduction thermique entre le rail et le crochet ; l'abaissement qui en résulte de la température du rail améliore à la fois sa résistance au fretting et sa tenue mécanique.

Enfin la technique consistant à introduire un clinquant présente l'avantage de ne pas, ou de seulement très peu, modifier les pièces et de pouvoir l'installer en rattrapage sur les pièces existantes, que ce soit en neuf ou en réparation. Le fait de le maintenir par un moyen de fixation permet d'assurer la mixabilité des pièces réparées avec les pièces neuves et leur interchangeabilité.

Le montage du clinquant avec sa solidarisation sur le rail antérieur 9 des aubes de distributeur 3, avant l'assemblage des pièces constituant le module de turbine, permet en outre de supprimer toute erreur de montage. Le système de fixation choisi permet enfin la démontabilité de ce clinquant.

L'invention, qui a été décrite en référence aux aubes de distributeur du deuxième étage d'une turbine BP sont applicables, mutatis mutandis, à d'autres aubages fixes, que ce soit ceux d'un autre étage de turbine BP ou ceux d'un étage de turbine HP.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Secteur d'aubes de distributeur de turbine destiné à être porté par un carter de turbine (7) d'une turbomachine aéronautique , comportant un moyen d'accrochage antérieur (9) et un moyen d'accrochage postérieur (10), ledit moyen d'accrochage antérieur (9) étant destiné à venir en appui sur un support (8) porté par le carter de turbine (7), ledit secteur comportant en outre un dispositif anti-usure (13) constitué par une pièce en matériau métallique enveloppant l'extrémité antérieure du moyen d'accrochage antérieur et s'intercalant entre ledit moyen d'accrochage antérieur (9) et ledit support (8) de façon à assurer un contact glissant entre ces deux pièces, **caractérisé en ce que** le dispositif anti-usure (13) est maintenu axialement en position sur ledit secteur d'aubes à l'aide d'un moyen de fixation (14, 16, 20) qui coopère avec le moyen d'accrochage antérieur (9).

2. Secteur d'aubes selon la revendication 1 **caractérisé en ce que** le moyen d'accrochage antérieur (9) a la forme d'une langue s'étendant axialement et **en ce que** la partie supérieure dudit dispositif (13) ne s'étend pas axialement sur toute la longueur du moyen d'accrochage antérieur (9).

3. Secteur d'aubes selon l'une des revendications 1 ou 2 **caractérisé en ce que** le dispositif anti-usure (13) est maintenu en place sur le moyen d'accrochage antérieur par au moins un pion (14) emmanché dans un alésage ménagé dans l'épaisseur du moyen d'accrochage (9).

4. Secteur d'aubes selon la revendication 1 **caractérisé en ce que** le dispositif anti-usure (13) s'étend sur toute la longueur du moyen d'accrochage antérieur (9) et se prolonge à son extrémité postérieure par un ressaut (16), ledit moyen ayant la forme d'une langue s'étendant axialement et comportant à son extrémité postérieure une gorge (17) dans laquelle s'enclenche ledit ressaut.

5. Secteur d'aubes selon la revendication 1 **caractérisé en ce que** le dispositif anti-usure (13) comporte au moins une languette (18) s'étendant sur toute la longueur du moyen d'accrochage antérieur (9) et se terminant à son extrémité postérieure par un ressaut (16), ledit moyen ayant la forme d'une langue s'étendant axialement et comportant à son extrémité postérieure une gorge (17) dans laquelle s'enclenche ledit ressaut (16).

6. Secteur d'aubes selon la revendication 5 **caractérisé en ce que** l'épaisseur hors tout du dispositif anti-usure (13), mesurée radialement, est inférieure ou égale à celle de ladite langue augmentée de celle de la partie dudit dispositif située entre le moyen d'accrochage antérieur (9) et le support (8), de sorte que ledit dispositif ne fasse pas saillie au dessus de la partie supérieure de ladite langue, ladite langue présentant des décrochements (19) permettant d'y insérer lesdites languettes (18).

7. Secteur d'aubes selon la revendication 1 **caractérisé en ce que** le dispositif anti-usure (13) s'étend sur toute la longueur du moyen d'accrochage antérieur (9) et comporte à son extrémité postérieure au moins un bord tombé (20), ledit moyen ayant la forme d'une langue s'étendant axialement et comportant à son extrémité postérieure au moins une découpe (21) apte à recevoir ledit bord tombé.

8. Secteur d'aubes selon la revendication 1 **caractérisé en ce que** le dispositif anti-usure (13) s'étend sur toute la longueur du moyen d'accrochage antérieur (9) et comporte sur sa face supérieure au moins une dépression (22), ledit moyen ayant la forme d'une langue s'étendant axialement et comportant sur la partie supérieure de cette langue au moins une dépression apte à coopérer avec la dépression (22) dudit dispositif.

9. Secteur d'aubes selon l'une des revendications 1 à 9 dans lequel le dispositif anti-usure (13) a une longueur sur la circonférence sensiblement égale à celle dudit secteur et est positionné avec un décalage angulaire par rapport audit secteur, de façon à pouvoir recouvrir, au moins partiellement, un secteur adjacent et à assurer une étanchéité entre les deux secteurs.

10. Secteur d'aubes selon l'une des revendications 1 à 9 **caractérisé en ce que** le dispositif anti-usure (13) est réalisé en un superalliage à base nickel ou cobalt.

11. Secteur d'aubes selon la revendication 10 **caractérisé en ce que** le matériau métallique est un alliage commercialisé sous la dénomination de HA188.

12. Secteur d'aubes selon l'une des revendications 1 à 11, dont l'épaisseur du matériau du dispositif anti-usure (13) est comprise entre 0.05 et 0.4 mm.

13. Module de turbine d'une turbomachine aéronautique comprenant au moins une roue d'aubes de distributeurs (3) constituée de secteurs selon l'une des revendications 1 à 12.

14. Moteur aéronautique comportant au moins un module de turbine selon la revendication 13.

## Patentansprüche

1. Abschnitt von Schaufeln einer Turbinendüse, der vorgesehen ist, um von einem Turbinengehäuse (7) einer Flugzeugturbomaschine getragen zu werden, mit einem vorderen Befestigungsmittel (9) und einem hinteren Befestigungsmittel (10), wobei das vordere Befestigungsmittel (9) dazu bestimmt ist, an einem Träger (8) anzuliegen, der von dem Turbinengehäuse (7) getragen wird, wobei der Sektor ferner eine Antiverschleißvorrichtung (13) umfasst, die aus einem Teil aus einem metallischem Werkstoff besteht, das das vordere Ende des vorderen Befestigungsmittels umhüllt und zwischen dem vorderen Befestigungsmittel (9) und dem Träger (8) so liegt, dass ein gleitender Kontakt zwischen den zwei Teilen sichergestellt ist, **dadurch gekennzeichnet, dass** die Antiverschleißvorrichtung (13) axial in Position auf dem Abschnitt von Schaufeln mit Hilfe eines Fixierungsmittels (14, 16, 20) gehalten wird, das mit dem vorderen Befestigungsmittel (9) zusammenwirkt.

2. Abschnitt von Schaufeln nach Anspruch 1, **dadurch gekennzeichnet, dass** das vordere Befestigungsmittel (9) die Form einer Zunge hat, die sich axial erstreckt, und dass der obere Teil der Vorrichtung (13) sich nicht axial über die gesamte Länge des vorderen Befestigungsmittels (9) erstreckt.

3. Abschnitt von Schaufeln nach einem der Ansprüche 1 oder 2, **dadurch gekennzeichnet, dass** die Antiverschleißvorrichtung (13) auf dem vorderen Befestigungsmittel mittels eines Zapfens (14), der in eine Bohrung eingepasst ist, die in der Dicke des Befestigungsmittels (9) aufgenommen ist, auf dem Platz gehalten wird.

4. Abschnitt von Schaufeln nach Anspruch 1, **dadurch gekennzeichnet, dass** sich die Antiverschleißvorrichtung (13) über die gesamte Länge des vorderen Befestigungsmittels (9) erstreckt und an ihrem hinteren Ende durch einen Vorsprung (16) verlängert ist, wobei das Mittel die Form einer Zunge hat, die sich axial erstreckt und an ihrem hinteren Ende eine Nut (17) umfasst, in der der Vorsprung eingerastet ist.

5. Abschnitt von Schaufeln nach Anspruch 1, **dadurch gekennzeichnet, dass** die Antiverschleißvorrichtung (13) mindestens eine Lasche (18) aufweist, die sich über die gesamte Länge des vorderen Befestigungsmittels (9) erstreckt und an ihrem hinteren Ende in einem Vorsprung (16) endet, wobei dieses Mittel die Form einer Zunge hat, die sich axial erstreckt und an seinem hinteren Ende eine Nut (17) umfasst, in der der Vorsprung (16) eingerastet ist.

6. Abschnitt von Schaufeln nach Anspruch 5, **dadurch gekennzeichnet, dass** die Dicke vollständig außerhalb der Antiverschleißvorrichtung (13) radial gemessen kleiner als oder gleich derjenigen der Zunge ist, die durch diejenige des Teils der Vorrichtung erhöht wird, das sich zwischen dem vorderen Befestigungsmittel (9) und dem Träger (8) befindet, so dass die Vorrichtung nicht über dem oberen Teil der Zunge hervorsteht, wobei die Zunge Ausnehmungen (19) aufweist, die das Einführen der Laschen (18) ermöglichen.

7. Abschnitt von Schaufeln nach Anspruch 1, **dadurch gekennzeichnet, dass** die Antiverschleißvorrichtung (13) sich über die gesamte Länge des vorderen Befestigungsmittels (9) erstreckt und an seinem hinteren Ende mindestens einen abgesenkten Rand (20) umfasst, wobei die Vorrichtung die Form einer Zunge hat, die sich axial erstreckt und an ihrem hinteren Ende mindestens einen Ausschnitt (21) umfasst, der geeignet ist, den abgesenkten Rand aufzunehmen.

8. Abschnitt von Schaufeln nach Anspruch 1, **dadurch gekennzeichnet, dass** die Antiverschleißvorrichtung (13) sich über die gesamte Länge des vorderen Befestigungsmittels (9) erstreckt und auf seiner Oberseite mindestens eine Vertiefung (22) umfasst, wobei das Mittel die Form von einer Zunge hat, die sich axial erstreckt und auf der Oberseite von dieser Zunge mindestens eine Vertiefung umfasst, die geeignet ist, mit der Vertiefung (22) der Vorrichtung zu kooperieren.

9. Abschnitt von Schaufeln nach einem der Ansprüche 1 bis 9, in der die Antiverschleißvorrichtung (13) eine Länge auf dem Umfang hat, die im Wesentlichen gleich derjenigen des Abschnitts ist und mit einem Winkelversatz mit Bezug auf den Abschnitt positioniert ist, um zumindest teilweise einen benachbarten Abschnitt zu bedecken, und eine Dichtigkeit zwischen den zwei Abschnitten sicherzustellen.

10. Abschnitt von Schaufeln nach einem der Ansprüche 1 bis 9, **dadurch gekennzeichnet, dass** die Antiverschleißvorrichtung (13) aus einer Superlegierung auf Basis von Nickel oder Kobalt hergestellt ist.

11. Abschnitt von Schaufeln nach Anspruch 10, **dadurch gekennzeichnet, dass** der metallische Werkstoff eine Legierung ist, die unter der Bezeichnung HA188 vertrieben wird.

12. Abschnitt von Schaufeln nach einem der Ansprüche 1 bis 11, deren Werkstoffdicke der Antiverschleißvorrichtung (13) zwischen 0,05 und 0,4 mm liegt.

13. Turbinenmodul einer Flugzeugturbomaschine mit mindestens einem Schaufelrad der Düsen (3), das Abschnitte nach einem der Ansprüche 1 bis 12 umfasst.

14. Flugzeugmotor, das mindestens ein Turbinenmodul nach Anspruch 13 umfasst.

## Claims

1. A turbine distributor blade segment which is designed to be supported by a turbine casing (7) of an aeronautical turbo-engine, comprising a front connection mean (9) and a rear connection means (10), said front connection mean (9) being designed to rest on a support (8) which is supported by the turbine casing (7), said segment additionally comprising an anti-wear device (13) constituted by a part made of metal material which envelops the front end of the front connection mean, and is interposed between said front connection mean (9) and said support (8), so as to provide sliding contact between these two parts, **characterized in that** the anti-wear device (13) is retained axially in position on said blade segment by means of a securing mean (14, 16, 20) which cooperates with the front connection mean (9).

2. The blade segment as claimed in claim 1, **characterized in that** the front connection mean (9) is in the form of a tongue which extends axially, and **in that** the upper part of said device (13) does not extend axially along the entire length of the front connection mean (9).

3. The blade segment as claimed in either of claims 1 and 2, **characterized in that** the anti-wear device (13) is retained in place on the front connection mean by at least one pin (14) which is fitted into a bore provided in the thickness of the connection mean (9).

4. The blade segment as claimed in claim 1, **characterized in that** the anti-wear device (13) extends along the entire length of the front connection mean (9), and is prolonged at its rear end by a projection (16), said mean having the form of a tongue which extends axially, and comprising at its rear end a groove (17) in which said projection is engaged.

5. The blade segment as claimed in claim 1, **characterized in that** the anti-wear device (13) comprises at least one tab (18) which extends along the entire length of the front connection mean (9), and ends in a projection (16) at its rear end, said mean having the form of a tongue which extends axially, and comprising at its rear end a groove (17) in which said projection (16) is engaged.

6. The blade segment as claimed in claim 5, **characterized in that** the overall thickness of the anti-wear device (13), measured radially, is smaller than or equal to that of said tongue increased by that of the part of said device which is situated between the front connection mean (9) and the support (8), such that said device does not project above the upper part of said tongue, said tongue having set-backs (19) allowing to insert said tabs (18) into them.

7. The blade segment as claimed in claim 1, **characterized in that** the anti-wear device (13) extends along the entire length of the front connection mean (9), and comprises at its rear end at least one dropped edge (20), said mean having the form of a tongue which extends axially, and comprising at its rear end at least one cut-out (21) which can receive said dropped edge.

8. The blade segment as claimed in claim 1, **characterized in that** the anti-wear device (13) extends along the entire length of the front connection mean (9), and comprises on its upper surface at least one indentation (22), said mean having the form of a tongue which extends axially, and comprising on the upper part of this tongue at least one indentation which can co-operate with the indentation (22) in said device.

9. The blade segment as claimed in one of claims 1 to 8, in which the anti-wear device (13) has a length along the circumference which is substantially equal to that of said segment, and is positioned with angular offsetting relative to said segment, such as to be able to overlap an adjacent segment at least partially and to provide sealing between the two segments.

10. The blade segment as claimed in one of claims 1 to 9, **characterized in that** the anti-wear device (13) is made of a superalloy based on nickel or cobalt.

11. The blade segment as claimed in claim 10, **characterized in that** the metal material is an alloy which is sold under the name HA188.

12. The blade segment as claimed in one of claims 1 to 11, the thickness of the material of the anti-wear device (13) of which is between 0.05 and 0.4 mm.

13. A turbine module of an aeronautical turbo-engine comprising at least one distributor-blade wheel (3) constituted by segments as claimed in one of claims 1 to 12.

14. An aeronautical engine comprising at least one turbine module as claimed in claim 13.
